# EUROPEAN PATENT APPLICATION

(11) **EP 1 376 441 A1**
(43) Date of publication of application: **02.01.2004**
(21) Application number: 03425420.1
(22) Date of filing: 26.06.2003
(51) Int. Cl.: G06F 17/60, G09F 27/00, H04M 11/00, H04N 7/173

(54) **A virtual counter system to deal with cases via data communication line**

(30) Priority: 28.06.2002 IT RM20020352
(71) Applicant: Impaccio, Alberto, 00176 Roma (IT)
(72) Inventor: Proietti, Gianfranco, I-02023, Fiamignano (RI) (IT)
(74) Representative: Sarpi, Maurizio

(57) **Abstract**

A plurality of remote, fully automated user stations are connected via data communication lines to a central station managing the requested services and provided with a remote assistance software for audio communication between the operator of the central station and the user so that they can share the resources of the computer of each remote station.

Each remote station consists essentially of a box including data processing unit, monitor, digital camera or scanner, printer, handset and means able to establish communication between said remote station and said central station as soon as the handset is picked up.

## Description

The present invention relates to data processing or informatics being in service of people and more particularly a data processing means acting as a virtual counter by which people are helped in their contacts with the public authority. Such virtual counter connected via data communication line to a central station allows the contact centres for people to be extended even to remote sites so that they can interact with the public authority by vocal and video communication to make a date or to ask for documents without being present at the competent office.

The invention finds immediate application for example in the National Health Services as it allows examinations to be booked even from remote stations to any regional medical facilities in case a central regional booking centre is operating.

It is known that people should be present at the competent medical facility upon booking an examination, thus suffering from heavy burdens above all when patients cannot delegate any person to perform that task.

The invention seeks to provide a solution able to overcome such problems and to propose a system allowing people to deal with cases from a plurality of automated remote stations connected via data communication lines to a central station for the management of the requested services which is provided with a remote assistance software for audio communication between the operator of the central station and the user so that they can share the resources of the computer of each remote station.

According to the present invention each remote station consists essentially of a box containing central processing unit, monitor, digital camera, scanner, printer, handset, and means able to put into communication the remote station and the central station as soon as the handset is picked up. The user can interact with such means by speaking with a remote operator of the central station by the handset and following the instructions received as he would be in front of a counter without any typing in.

In case the user has to show a document, he will place it on the plane of the digital camera or the scanner so that it can be transmitted to the central station in real time. Thus the monitor of the computer of the central station can display such document of the user before being printed by the printer of the station. It is self-evident that the user is requested to perform such an easy operation that anyone even not skilled could perform without any difficulty or knowledge of informatics as the task of the user is only that of showing documents and answering questions of the operator. To this end, it should be noted that the user should not type in anything. In fact, a peculiar characteristics of the invention is that there is no keyboard for data processing or the phone connection.

Further advantages and features of the invention will follow from the following description with reference to the accompanying drawings that show only by way of a not limiting example a preferred embodiment thereof.

In the drawings:

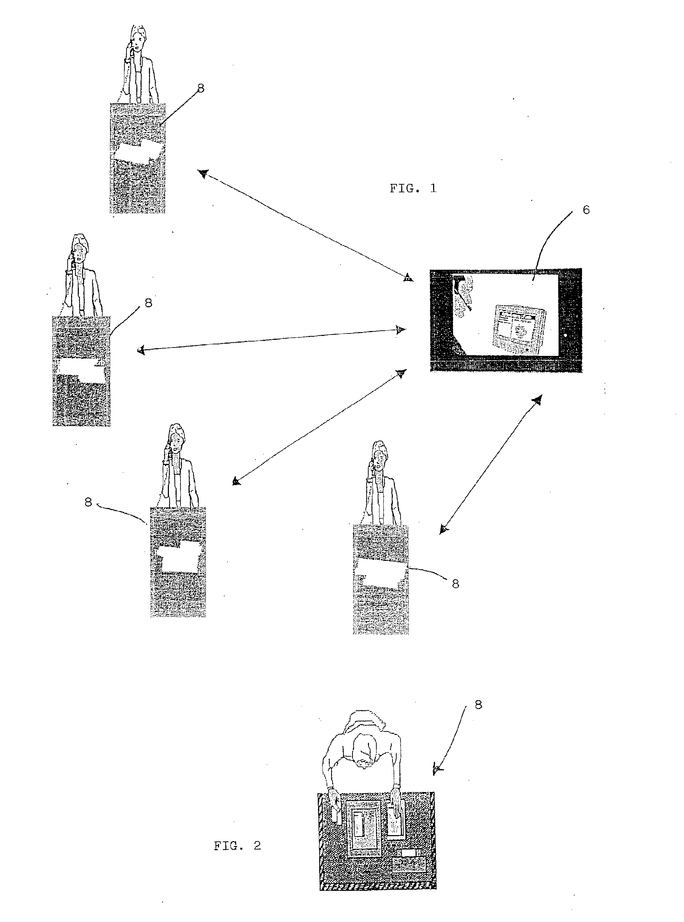

Fig. 1 shows schematically a network of stations or boxes connected to a central station or call centre;
Fig. 2 is a top plan view of one of the boxes;

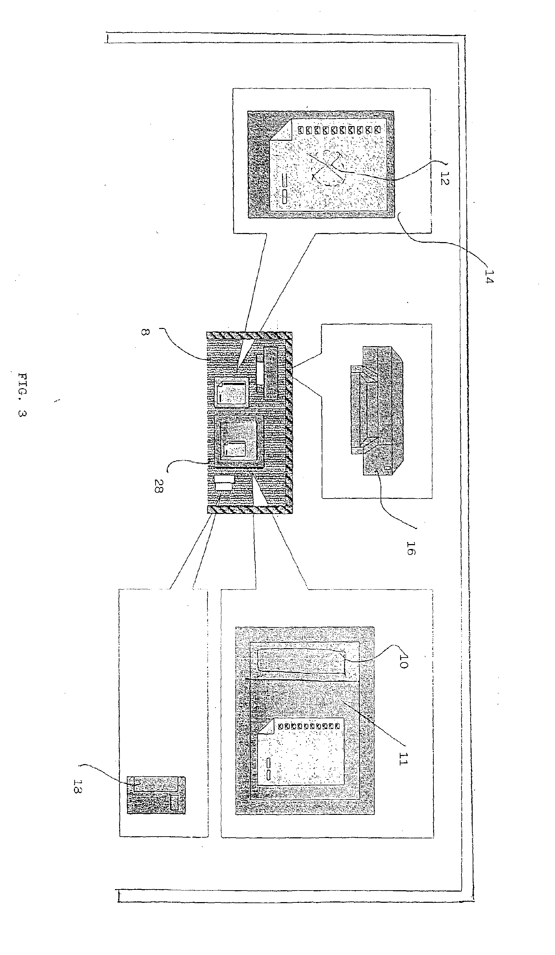

Fig. 3 shows the several means which the user is provided with on the desktop;
Fig. 4 is a flow chart of the system according to the invention.

With reference to the figures, the system of the invention includes essentially a central assistance station or call centre 6 which is connected via data transmission line, for example via Internet, to a plurality of remote stations or boxes 8 performing the functions of virtual counters that can be installed inside dedicated kiosks or public premises such as bars, waiting rooms, etc.

Each box 8 includes a data processing unit 10 provided with monitor 11, a digital camera or scanner 12, its plane 14, a preferably thermal printer 16, a handset or microphone and loudspeakers 18. Optionally, there can be also provided a smart card reader, a badge reader, a bar code reader, and an UPS (Uninterruptible Power System).

In the preferred embodiment shown in the figures, the user has a generally horizontal desktop or working plane 28, where the above-mentioned units are placed and can be used. A panel or partition 30 surrounding the box by three sides ensures the privacy.

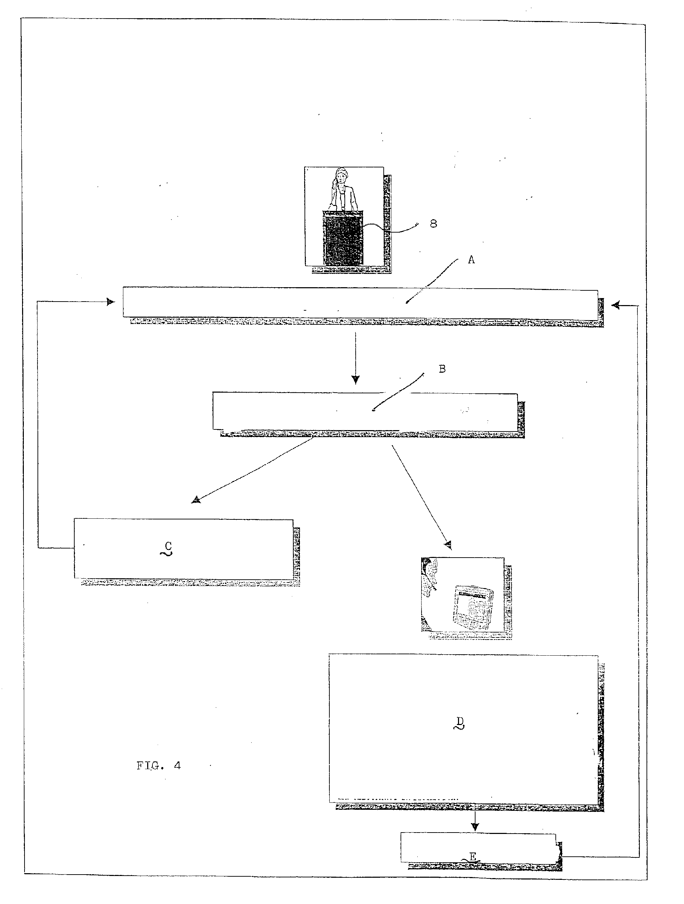

Fig. 4 shows schematically how the virtual counter can be used.

After having reached the station, the user picks up handset 18 for the connection to the central station or call centre 6 (block A).

An audiovisual message informs the user that his request has been forwarded to the operator (block B).

If the user does not hang up (block C), the call centre operator receives the call from the box and interacts with the user both by speaking with him through the communication software and by sharing resources, programs and documents through a software for sharing the resources of the remote data processing unit installed in the server of the call centre (block D). The operator is then able to watch documents, certificates, etc. of the user when the latter places them on the plane 14 and can also show the operation performed, e.g. a reservation, certificates etc., to the user on monitor 11 of the box. Thus the user sees on the monitor 11 the several items offered and be speaking with the operator selects that item which is suitable for his needs.

The user receives the printout including all of the necessary information relative to the reservation performed as well as any document through the printer of the box. Then the user hangs up and can leave the box (block E).

## Claims

1. A virtual counter system to deal remotely with cases, to ask for documents as well to make reservations, **characterized in that** it includes a plurality of remote user stations connected via data communication line to a central station where operators receive any call from each remote station, each said remote station consisting of a box including data processing unit, monitor, digital camera or scanner, handset by which the user can call and speak with said central station, and means able to establish communication between said remote station and said central station as soon as the handset is picked up, said central station being provided with a network server and a software for sharing the resources of the data processing unit of each remote station.

2. The virtual counter system according to the preceding claim, **characterized in that** each box is further provided with a printer.

3. The virtual counter system according to the preceding claims, **characterized in that** each box has a working plane or desktop on which the image sensing plane of the digital camera or scanner is placed, said working plane being in an ergonomically correct position with respect to printer, handset and monitor.

4. The virtual counter system according to the preceding claims, **characterized in that** the operation of the digital camera and the printer of the box is controlled by the central station by software.

5. The virtual counter system according to the preceding claims, **characterized in that** the operator is able to show to the user the several items offered to him through the monitor of the box so that the user can select the most suitable for his needs by speaking with the operator.

6. The virtual counter system according to the preceding claims, **characterized in that** the box can be placed in outside kiosks or within any public premise.

7. The virtual counter system according to claim 1, **characterized in that** each box is further provided with a camera able to show the user to the central operator.

8. The virtual counter system according to claim 1, **characterized in that** each box is further provided with a smart card reader.

9. The virtual counter system according to claim 1, **characterized in that** each box is further provided with a badge reader.

10. The virtual counter system according to claim 1, **characterized in that** each box is further provided with a bar code reader.

11. The virtual counter system according to claim 1, **characterized in that** each box is provided with an uninterruptible power system.
